# FASCICULE DE BREVET EUROPEEN

(11) **EP 2 535 516 B1**
(45) Date de publication et mention de la délivrance du brevet: **26.02.2014**
(21) Numéro de dépôt: 11170460.7
(22) Date de dépôt: 17.06.2011
(51) Int. Cl.: F01D 5/30, F01D 5/34, B23K 20/12

(54) **Procédé de soudage par friction d'aubes à un tambour de compresseur axial et dispositif correspondant**
Reibschweißverfahren von Laufradschaufeln für die Rotortrommel eines Axialkompressors, und entsprechende Vorrichtung
Method for friction soldering blades to an axial compressor drum, and corresponding device

(43) Date de publication de la demande: 19.12.2012
(73) Titulaire: Techspace Aero S.A., 4041 Herstal (Milmort) (BE)
(72) Inventeur: Wlasowski, Michel, 4800 Verviers (BE)
(74) Mandataire: Lecomte, Didier

(56) Documents cités:
- EP-A1- 0 404 531
- EP-A1- 2 204 541
- EP-A1- 2 281 653
- EP-A2- 0 397 387
- US-A- 5 813 593

## Description

### Domaine technique

L'invention a trait à un procédé de soudage par friction d'aubes à un rotor de turbomachine axiale, plus particulièrement à un tambour de compresseur de turbomachine axiale. L'invention a trait également à un dispositif correspondant, à savoir destiné à mettre en oeuvre ledit procédé. L'invention a trait également à un rotor de turbomachine axiale résultant du procédé et/ou du dispositif.

### Technique antérieure

Le soudage par friction est un procédé de soudage mécanique où la chaleur nécessaire pour le soudage est fournie en frottant l'une contre l'autre les pièces à assembler sous une pression axiale dite de forgeage.

Le document de brevet US 2003/0201305 A1 divulgue un dispositif de soudage par friction pour la fixation d'aubes à un rotor. Le principe de soudage divulgué dans ce document est basé sur la friction linéaire et exploite un dispositif initialement prévu pour du soudage linéaire, à savoir apte à imprimer un mouvement de va-et-vient à une pièce à souder par rapport au substrat auquel elle est destinée à être soudée. Le mouvement de la pièce à souder, en l'occurrence l'aube, est guidé de manière à décrire un trajet courbe correspondant essentiellement au profil de l'aube selon une section transversale. L'objectif de cette trajectoire courbe est d'éviter qu'une partie de la surface de contact de l'aube avec le rotor ne soit découverte lors de la friction et subisse un contact direct avec l'air ambiant et un refroidissement non contrôlé. Cette solution est par conséquent particulièrement adaptée aux aubes à forte courbure. Ce procédé requiert cependant un équipement lourd et coûteux notamment en raison de l'application de soudage à friction linéaire. En effet, les mouvements alternatifs de va-et-vient de la pièce à souder sont particulièrement contraignants notamment au niveau de l'équipement qui va assurer le mouvement de la pièce. Cette solution n'est par conséquent pas particulièrement intéressante d'un point de vue coût, en particulier d'un point de vue des coûts fixes (appelés aussi coûts non récurrents).

Le document de brevet EP 2 281 653 A1 divulgue un procédé selon le préambule de la revendication 1 ainsi qu'un dispositif selon le préambule de la revendication 10. Cet enseignement s'intéresse au problème de manque de contrôle de la pression de forgeage aux extrémités de l'interface entre les pièces à souder lorsque la section de matière sous l'interface diminue selon un angle trop important. Le procédé décrit a pour particularité de prévoir une première zone sous l'interface sans diminution de section suivie ensuite d'une deuxième zone avec un retrait progressif de matière. Le procédé de soudage qui y est décrit en relation avec l'exemple de réalisation est un procédé de soudage par friction linéaire. Il prévoit qu'un soudage par friction orbitale peut également être appliqué sans pour autant en préciser les conditions d'application. Tout comme pour le document précédent, cet enseignement se focalise sur un procédé de soudage par friction linéaire qui est coûteux en équipement. Bien qu'il mentionne d'autres procédés de soudage par friction, comme le soudage par friction rotatif, inertiel ou encore orbital, il manque de procurer et de détailler une solution plus économique.

Le document de brevet EP 0 404 531 A1 divulgue un procédé selon le préambule de la revendication 1 ainsi qu'un dispositif selon le préambule de la revendication 10. Le document de brevet US 5,813,593 divulgue un procédé et un dispositif de soudage par friction en translation d'aubes à un rotor de turbomachine axiale.

### Résumé de l'invention

### Problème technique

L'invention a pour objectif de proposer une solution pour la fixation d'aubes à un rotor de turbomachine axiale, qui soit plus économique que les procédés connus de soudage par friction linéaire.

### Solution technique

L'invention a pour objet un procédé de soudage conforme à la revendication 1.

Avantageusement, le rotor reste totalement fixe durant l'opération de soudage selon les étapes (b) et (c), l'étape (c) étant assurée exclusivement au niveau de l'aube.

L'aube est mise en pression contre la zone du rotor destinée à recevoir l'aube durant l'étape (b). Cette pression est maintenue et préférentiellement augmentée durant l'étape (c). Différents profils de mise en pression peuvent être appliqués durant les étapes (b) et/ou (c).

Selon un mode avantageux de l'invention, le rotor est un tambour de compresseur, préférentiellement comprenant un voile généralement symétrique en révolution autour de l'axe du rotor et définissant un volume intérieur creux avec une première entrée à une extrémité avant du tambour et une deuxième entrée à l'extrémité arrière.

Le rotor comprend préférentiellement au moins deux rangées d'aubes, plus préférentiellement encore au moins trois rangées d'aubes.

Selon un encore autre mode avantageux de l'invention, la mise en place d'au moins un support à l'intérieur du tambour comprend la mise en place d'un noyau à l'intérieur du tambour, le noyau étant configuré pour servir de base au support sur la surface interne opposée du tambour, le noyau s'étendant préférentiellement sur au moins la moitié de la longueur du tambour entre la première entrée et la deuxième entrée.

Selon un encore autre mode avantageux de l'invention, l'étape (a) comprend la mise en place du rotor sur un berceau via un plateau diviseur de manière à pouvoir positionner angulairement le rotor suivant son axe principal par rapport au berceau.

Selon un encore autre mode avantageux de l'invention, le berceau est conçu pour être apte à pivoter par rapport à un axe transversal, préférentiellement perpendiculaire, à l'axe principal du rotor et à la direction de mise en pression de l'aube contre le rotor de l'étape (c). Cet axe est préférentiellement horizontal.

Selon un encore autre mode avantageux de l'invention, le berceau est mobile en translation suivant une direction généralement perpendiculaire à la direction de mise en pression de l'aube contre le rotor de l'étape (c) et essentiellement comprise dans un plan comprenant l'axe principal du rotor. Cette direction est préférentiellement verticale.

Selon un encore autre mode avantageux de l'invention, l'étape (b) comprend la préhension de l'aube par un dispositif de préhension pourvu de moyens de fixation rapide. Le dispositif de préhension peut prendre la forme d'une cassette. Il comprend préférentiellement au moins une mâchoire de bridage d'une plateforme de l'aube. Il comprend une ouverture ou cavité apte à recevoir l'aube.

Selon un encore autre mode avantageux de l'invention, le rotor comprend des excroissances avec des profils d'aube, formant des surfaces de réception des aubes avant soudage.

Selon un encore autre mode avantageux de l'invention, l'aube comprend une plateforme du côté de sa partie destinée à être soudée au rotor, la plateforme présentant une excroissance dont la section présente un profil d'aube et destinée à venir en contact avec la surface de réception de l'aube.

L'invention a également pour objet un dispositif de soudage par friction d'aubes à un rotor de turbomachine axiale, conforme à la revendication 10.

Selon un mode avantageux de l'invention, le berceau comprend un plateau diviseur apte à permettre un positionnement angulaire du rotor selon son axe de rotation.

Selon un autre mode avantageux de l'invention, le berceau peut comprendre une surface de réception du rotor et un palier à distance de la surface de réception, le palier étant apte à recevoir un axe généralement perpendiculaire à la surface de réception.

Selon un encore autre mode avantageux de l'invention, le support d'aube comprend un logement destiné à recevoir une cassette à dépouille de préhension de l'aube.

L'invention a également pour objet un rotor de turbomachine axiale obtenu par le procédé selon l'invention et/ou au moyen du dispositif selon l'invention.

### Avantages apportés

La solution proposée par l'invention présente l'avantage de permettre la réalisation d'un rotor de turbomachine axial à un coût très avantageux. Le soudage par friction linéaire est en effet couramment utilisé pour les rotors massifs et compacts du type disque (couramment appelés « bladed disks » ou encore « blisks ») ou du type anneau (couramment appelés « bladed rings » ou encore « blings »), notamment dans une configuration où le rotor est immobile. Ce procédé requiert cependant un appareillage coûteux notamment en raison de la nature alternative du mouvement de va-et-vient de la pièce à souder. Le soudage par friction orbitale, par rapport au soudage par friction linéaire, n'est pas paru naturel pour la fixation d'aubes en raison de la forme allongée des aubes. En effet, avec la soudure par friction orbitale où les deux surfaces sont généralement en mouvement, la composante du mouvement qui est perpendiculaire à la direction principale de l'aube est susceptible de couvrir d'avantage la surface au niveau de l'interface. Les inventeurs ont découvert que l'application d'un mouvement de friction orbital à un procédé où le rotor est immobile du moins dans le plan du mouvement orbital présente de nombreux avantages. Parmi ces avantages, on compte notamment la simplification de la cinématique de la machine et des accessoires, ce qui engendre une diminution des coûts des équipements ainsi qu'une diminution de la consommation d'énergie. La préhension de l'aube requiert cependant une attention particulière en raison du mouvement selon deux directions principales X et Y et l'espace entre les aubes. Pour des rotors du type tambour, des mesures particulières peuvent s'avérer utiles pour le bridage ainsi que pour le soutien du voile du tambour. Toujours dans une logique de réduction des coûts de fabrication et, partant, d'une diminution du temps machine nécessaire, la préhension des aubes ainsi que le positionnement du rotor méritent une attention particulière.

### Brève description des dessins

La figure 1 est une vue en coupe d'une turbomachine axiale double-flux, comportant plusieurs rotors munis d'aubes fixées potentiellement selon le procédé de l'invention. Elle comprend une vue agrandie en coupe partielle de la partie compresseur basse-pression de la turbomachine, les aubes étant fixées au rotor du compresseur par le procédé et au moyen du dispositif selon l'invention.

La figure 2 est une vue en plan et partiellement en coupe d'un dispositif de soudage par friction orbital selon l'invention.

La figure 3 est une vue en perspective d'une portion de tambour du compresseur de la figure 1, ainsi que d'une aube en mouvement orbital sur une excroissance correspondante du tambour.

La figure 4 est une vue en perspective du dispositif de préhension de l'aube du dispositif de la figure 2. L'aube est logée et bridée dans le dispositif et ce dernier est destiné à être lui-même fixé à un support soumis au mouvement orbital.

La figure 5 est en vue en plan d'une portion du tambour avec le dispositif de préhension de la figure 4.

### Description des modes de réalisation

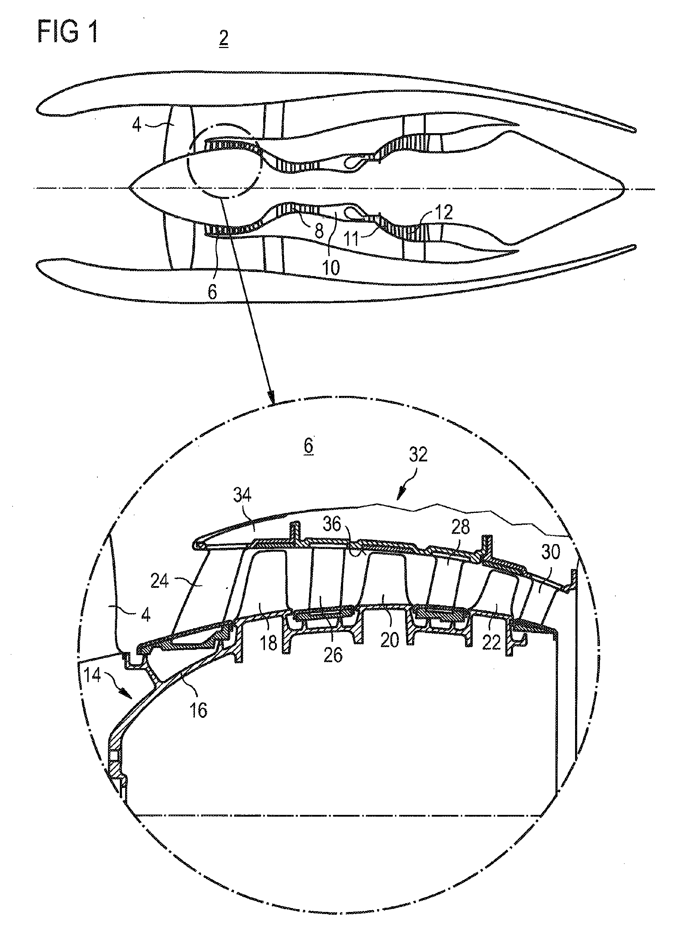

La figure 1 illustre une turbomachine axiale double-flux 2 du type moteur d'avion. Une telle machine comprend successivement depuis son entrée jusqu'à sa sortie : un ventilateur 4 (communément désigné « fan »), un compresseur basse-pression 6, un compresseur haute-pression 8, une chambre de combustion 10, une turbine haute-pression 11 et une turbine basse-pression 12. L'air d'entrée est forcé dans la machine par le ventilateur 4 pour ensuite se diviser en un flux primaire traversant les différents composants principaux sus mentionnés, et un flux secondaire traversant la machine à l'extérieur de ces composants et rejoignant le flux primaire à la sortie en vue de générer la poussée propulsive.

Le compresseur basse-pression 6 illustré en détail dans la partie agrandie de la figure 1 comprend essentiellement un rotor 14 et un stator 32. Le rotor est formé par un voile 16 généralement symétrique en révolution autour de son axe de rotation, le voile 16 étant pourvu de rangées d'aubes rotoriques 18, 20 et 22. Le stator 32 comprend un bec de séparation 34 du flux d'entrée et une paroi 36 délimitant le flux primaire et pourvue de rangées d'aubes statoriques 24, 26, 28 et 30. Les rangées d'aubes statoriques et rotoriques sont disposées en alternance de manière à former plusieurs étages de compression, chaque étage étant formé par un couple d'une rangée d'aubes rotorique et d'une rangée d'aubes statoriques.

Des dispositif d'étanchéité dynamique connus en soi de l'homme de métier sont prévus entres les extrémités des aubes rotoriques 18, 20 et 22 et la paroi 36 délimitant la veine fluide du flux primaire, ainsi qu'entre les extrémités des aubes statoriques 24, 26, 28 et 30 avec le voile 16 du tambour 14.

Le tambour 14 est typiquement fabriqué en matériau métallique tel que par exemple du titane ou de l'acier inoxydable. Son voile 16 est en forme générale d'ogive délimitant un volume interne creux. Il peut être fabriqué par usinage à partir d'un voile brut formé notamment par forgeage. Ce brut aura un profil et une épaisseur s'approchant au maximum du profil et de l'épaisseur du voile fini 16 tel qu'illustré à la figure 1, et ce afin de minimiser la quantité de matière à enlever et le temps machine associé à cette opération.

Les aubes, notamment les aubes rotoriques, sont fabriquées séparément pour être ensuite fixées au voile 16 du tambour 14. En effet, bien qu'il soit bien sûr possible d'usiner les aubes rotoriques directement dans le brut destiné à former le tambour 14, il est cependant souhaitable pour des raisons essentiellement économique de les fabriquer séparément et de les fixer ensuite au voile du tambour. Ceci est d'autant plus vrai lorsque le tambour est de grand diamètre. En effet, dans ce cas, le nombre d'aubes augmente fortement et le temps machine pour leur usinage hors masse deviendrait alors fort élevé, sans compter le coût de matière nécessaire pour le brut du voile.

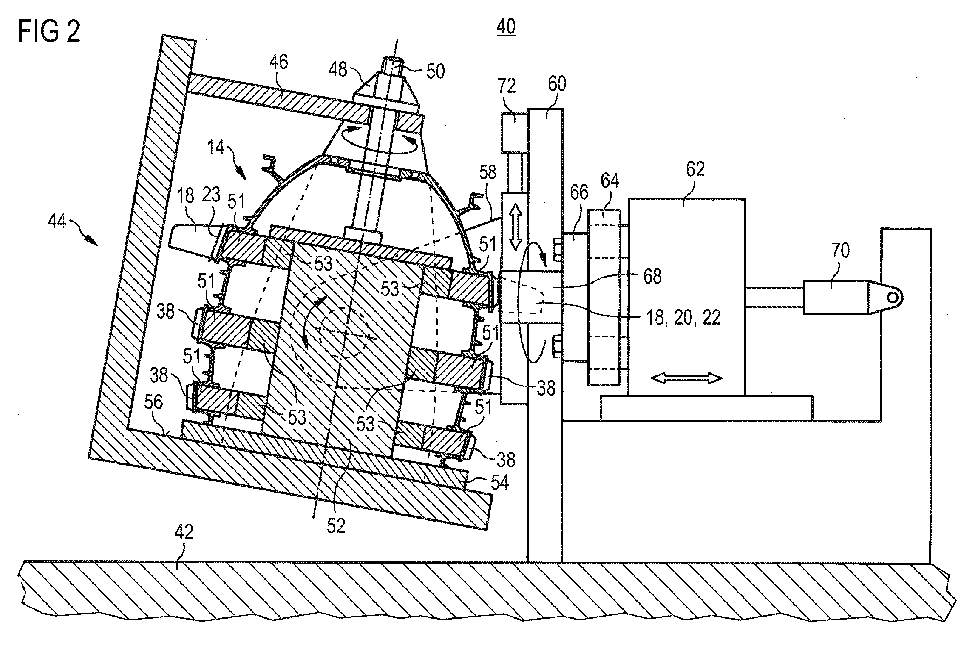

Les aubes rotoriques 18, 20 et 22 sont en fait fixées au voile 16 du tambour 14 par un procédé de soudage par friction orbital tel qu'illustré à la figure 2.

La figure 2 illustre un dispositif de soudage par friction orbital 40 pour un tambour de compresseur axial tel que le tambour 16 de la figure 1. Le dispositif 40 comprend un bâti 42 supportant un berceau 44 pour le tambour en question. Il comprend également un support d'aube à mouvement de friction orbital, constitué essentiellement d'une cassette 68 de préhension de l'aube, d'un logement 66 de ladite cassette 68, d'un plateau 64 auquel le logement 66 est rigidement fixé et d'une unité de mise en mouvement orbital 62. Cet ensemble est monté coulissant en translation horizontale par rapport au bâti via des glissières et mobile via un vérin 70.

Le berceau 44 comprend une surface de réception 56 du tambour 14, ce dernier étant disposé avec son ouverture arrière (dans le sens d'écoulement du flux d'air dans la turbomachine) sur la surface de réception 56 de manière à ce que l'axe de rotation du tambour 14 soit généralement vertical. Un plateau diviseur 54 est disposé entre la surface de réception 56 du berceau 44 et le bord arrière du tambour 14 de manière à permettre un positionnement angulaire précis de ce dernier pour les différentes aubes de chaque rangée. Des moyens de fixation du type à serrage (non illustrés) peuvent être prévus entre le plateau diviseur et le bord arrière du tambour 14.

Le berceau comprend également un bras de fixation 46 au droit et à distance de la surface de réception. Ce bras de fixation 46 supporte un palier 48 de maintien d'un axe 50 disposé au travers de l'ouverture avant du tambour 14. Cet axe coopère avec un noyau 52 disposé à l'intérieur du volume creux formé par le tambour 14. Le noyau 52 sert d'appui à des supports 51 disposés au niveau de la surface interne des zones de réception des aubes. Des dispositifs 53 de mise en place et éventuellement de serrage des supports 51 sont prévus entre le noyau 52 et lesdits supports 51. Ces dispositifs 53 et les supports 51 peuvent prendre diverses formes. En effet, à titre d'exemple, les supports 51 peuvent être segmentés et les dispositifs de mise en place et de serrage peuvent être du type à excentrique.

Les supports 51 ont pour objectif de soutenir le voile 16 du tambour 14 lors des opérations de soudage par friction, plus particulièrement lorsque l'aube est soumise à une pression de forgeage contre le tambour après l'échauffement par friction à mouvement orbital.

Comme cela est visible aux figures 1 et 2, le voile 16 du tambour 14 comprend également des zones de réception 38 des aubes rotoriques. Dans l'exemple des figures 1 et 2, ces zones présentent une géométrie particulière destinée à optimiser la raideur du rotor ainsi que sa masse. Le tambour comprend trois de ces zones construites de manière similaire. La zone de réception est de forme annulaire et constituée essentiellement de deux parties de voile sous forme de nervures généralement perpendiculaires à l'axe de rotation et d'une partie centrale supportant la rangée d'aubes. Sa section est en forme de lettre grecque pi (π). La partie centrale est ainsi surélevée par rapport à la paroi avoisinante. Cette surélévation dans une direction généralement perpendiculaire à l'axe de rotation et orientée vers l'extérieur du corps creux permet à la surface extérieure de la partie centrale d'être au niveau des surfaces des viroles intérieures avoisinantes délimitant la veine fluide (voir détail de la figure 1). Ces surfaces des viroles intérieures sont en effet à distance du voile en raison de la hauteur des léchettes et de l'épaisseur nécessaire de la virole. Les surfaces des viroles intérieures et des parties centrales des zones annulaires, qui délimitent la veine fluide sont ainsi généralement compensées et alignées de manière à assurer un écoulement le moins perturbé possible.

La partie centrale de la zone de réception des aubes est généralement de section généralement droite ou légèrement courbée de manière à correspondre à la forme générale de la veine fluide du rotor. Cette partie centrale présente une forme généralement annulaire avec des excroissances ou moignons 38 formant des pieds d'aubes intégralement formés avec elle. La partie centrale constitue ainsi une plateforme généralement annulaire pour la rangée d'aube. La zone annulaire de réception des aubes forme ainsi une cavité annulaire à l'intérieur du corps creux et ouverte vers ce dernier, en direction de l'axe de rotation. La section de la zone annulaire dans un plan passant par l'axe de rotation présente un profil généralement en « U » dont l'ouverture est dirigée vers l'axe de rotation. Ces profils sont particulièrement adaptés à recevoir les supports 51.

Le berceau 44 est monté pivotant selon un axe généralement horizontal et essentiellement perpendiculaire à l'aube et à la direction de forgeage de l'aube vers le tambour. Cet axe est préférentiellement disposé de manière à traverser le tambour. Il est toutefois à noter qu'il pourrait être à distance du tambour. La fonction du pivotement du berceau consiste en effet à permettre un changement de l'orientation du tambour de manière à présenter une zone de réception de l'aube qui soit généralement dans le plan du mouvement orbital de l'aube. Pour ce faire, le berceau est monté pivotant par rapport à un guide 58 apte à se déplacer verticalement par rapport à un guide vertical 60 du bâti 42, et ce grâce à des moyens de commande 72 tels que des moyens à vis sans fin animée par un moteur électrique. Cette combinaison de mouvement vertical et de basculement du berceau 44 permet un positionnement du tambour pour réaliser le soudage des aubes des différents étages.

Le plateau diviseur 54 et la liaison rotative de l'axe 50 du noyau 52 au moyen du palier 48 permettent de facilement positionner angulairement le tambour 14 pour la fixation de chaque aube d'une rangée d'aubes, et ce sans devoir débrider le tambour et procéder à des réglages précis et coûteux en temps.

Le mouvement orbital de l'aube est généré au niveau du plateau 64 au moyen d'un excentrique entrainé par des moteurs électriques dans l'unité de mise en mouvement orbital 62. Le réglage du déphasage entre ces excentriques permet de modifier les mouvements imprimés à l'aube. Les moyens de mise en mouvement orbital sont connus en soi de l'homme de métier.

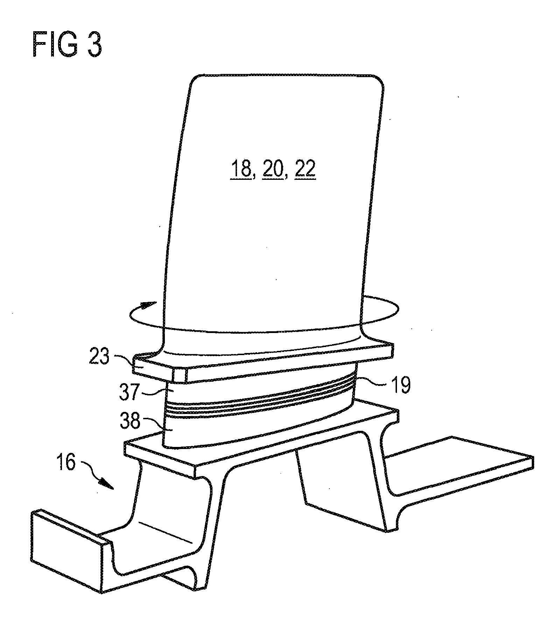

La figure 3 illustre le principe de soudage par friction orbital entre une aube 18, 20 ou 22 et le tambour 16. L'aube 18, 20 ou 22 comprend une plateforme 23 à proximité d'une extrémité du côté de l'aube destiné à être soudé au tambour. La plateforme 23 sert essentiellement de moyen de préhension et de positionnement de l'aube notamment dans un plan parallèle au plan du mouvement orbital. De manière préférentielle, une excroissance 37 est prévue sous la plateforme 23, c'est-à-dire du côté de la plateforme qui est destiné à être soudé au tambour. Cette excroissance 37 présente une section dont le profil correspond essentiellement à un profil d'aube. Cette excroissance présente une surface frontale qui est mise en contact avec une surface frontale correspondante de l'excroissance 38 de la zone de réception. L'aube et la surface frontale de l'excroissance 37 de la plateforme 23 sont mises en mouvement selon une trajectoire généralement orbitale de faible rayon de manière à ce que ladite surface reste majoritairement en contact avec la surface correspondante sus mentionnée. L'orientation générale de l'aube reste constante. Ce mouvement est accompagné d'une mise en pression des surfaces de contact de manière à générer un échauffement homogène de toute l'interface grâce à une vitesse tangentielle uniforme. Cet échauffement génère ainsi une zone de soudage ou forgeage 19. Une fois la température désirée atteinte, le mouvement est stoppé dans une position de référence et un effort de forgeage est exercé sur l'aube vers le tambour afin de former la soudure.

Après soudure, un usinage est ensuite nécessaire afin d'enlever la matière de l'interface qui aura été repoussée par l'extérieur (appelée communément « flash ») ainsi que pour enlever la plateforme. Cet usinage est préférentiellement adaptatif, à savoir qu'il s'adapte à la surface de l'aube ainsi formée au voisinage de la soudure de manière à éviter tout ressaut lié à l'usinage.

Il est à noter que la présence de l'excroissance 37 sous la plateforme est optionnelle compte tenu de l'opération d'usinage qui s'ensuit.

Il est à également à noter que la présence de l'excroissance 38 sur le tambour est également optionnelle. Elle facilite cependant l'opération d'usinage qui s'ensuit.

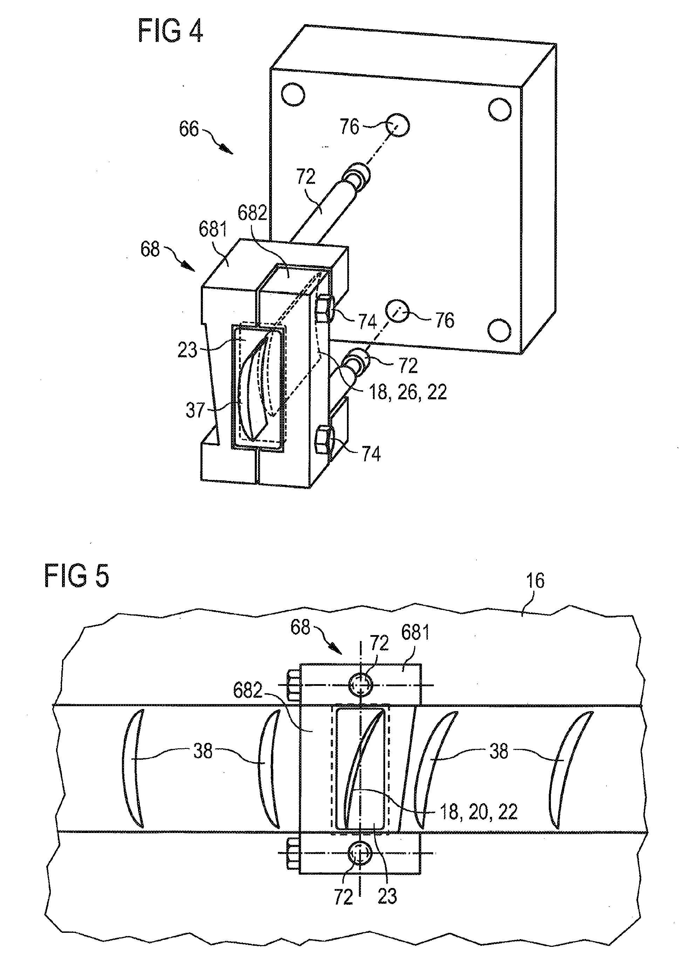

La figure 4 illustre en détail le dispositif de préhension 68 de l'aube ainsi que la pièce de fixation 66 dudit dispositif. Le dispositif de préhension 68 est généralement adapté à l'encombrement inter aube et constitué essentiellement de deux parties 681 et 682. La première partie 681 constitue le corps du dispositif et la deuxième partie 682 constitue une bride ou mâchoire destinée à être mise en pression afin de serrer la plateforme 23 de l'aube contre le corps du dispositif. Les moyens de serrage peuvent être par exemple des moyens à vissage tels que des vis 74 disposées transversalement à proximité de la face frontale du dispositif. D'autres moyens de serrage tels que par exemple un serrage thermique par frettage sont également envisageables. Le serrage est destiné à assurer un positionnement précis de l'aube, plus particulièrement de son extrémité destinée à être soudée au tambour, et ce essentiellement dans le plan du mouvement orbital. Le positionnement de l'aube selon une direction axiale ou principale de l'aube peut être assuré par le serrage, par le logement formant un épaulement et/ou par un appui de l'extrémité de l'aube sur le fond du dispositif de préhension. Chacune des première et deuxième parties 681 et 682 du dispositif 68 peut présenter une dépouille épousant au moins partiellement la surface extérieure de l'aube. Le dispositif de préhension 74 comprend des moyens de fixation rapide avec la pièce support 66. Ces moyens comprennent au moins deux goujons 72 s'étendant généralement parallèlement à la direction principale de l'aube et destinés à pénétrer des orifices correspondants 76 dans la pièce support 66. Ils comprennent chacun un épaulement à leur extrémité libre de manière à pouvoir entrer en prise avec des moyens de serrage préférentiellement rapides (non représentés) disposés au niveau de la pièce support 66. Ces moyens peuvent prendre diverses formes et sont bien connues en soi de l'homme de métier..

Il est à noter que la réalisation du principe du dispositif de préhension et de la pièce support de cette dernière peut prendre diverses formes.

## Revendications

1. Procédé de soudage par friction d'aubes (18, 20, 22) à un rotor (14) de turbomachine axiale (2), comprenant les étapes suivantes :
(a) mise en position du rotor (14) de manière à présenter une surface de réception (38) d'une des aubes ;
(b) mise en mouvement de friction de l'aube (18, 20, 22) contre la surface de réception (38) de l'aube (18, 20, 22) essentiellement dans un plan moyen de contact de l'aube avec ladite surface de manière à atteindre une température de soudage, le rotor (14) étant immobile dans le plan de mouvement de friction de l'aube (18, 20, 22) ; et
(c) immobilisation de l'aube (18, 20, 22) et forgeage de l'aube (18, 20, 22) contre le rotor (14) ;
**caractérisé en ce que** le mouvement de l'aube (18, 20, 22) à l'étape (b) est du type orbital, et l'étape (a) comprend la mise en place d'un support (51) à l'intérieur du rotor (14) sur une surface interne opposée à la surface de réception (38) de l'aube de manière à soutenir ladite surface de réception par rapport à la mise en pression de forgeage de l'aube (18, 20, 22) de l'étape (c).

2. Procédé selon la revendication 1, **caractérisé en ce que** le rotor est un tambour (14) de compresseur, préférentiellement comprenant un voile (16) généralement symétrique en révolution autour de l'axe du rotor et définissant un volume intérieur creux avec une première entrée à une extrémité avant du tambour et une deuxième entrée à l'extrémité arrière.

3. Procédé selon les revendications 1 et 2, **caractérisé en ce que** la mise en place d'un support (51) à l'intérieur du tambour (14) comprend la mise en place d'un noyau (52) à l'intérieur du tambour (14), le noyau (52) étant configuré pour servir de base au support (51) sur la surface interne opposée du tambour, le noyau s'étendant préférentiellement sur au moins la moitié de la longueur du tambour entre la première entrée et la deuxième entrée.

4. Procédé selon l'une des revendications 1 à 3, **caractérisé en ce que** l'étape (a) comprend la mise en place du rotor (14) sur un berceau (44) via un plateau diviseur (54) de manière à pouvoir positionner angulairement le rotor (14) suivant son axe principal par rapport au berceau (44).

5. Procédé selon la revendication 4, **caractérisé en ce que** le berceau (44) est conçu pour être apte à pivoter par rapport à un axe transversal, préférentiellement perpendiculaire, à l'axe principal du rotor (14) et à la direction de mise en pression de l'aube (18, 20, 22) contre le rotor de l'étape (c).

6. Procédé selon l'une des revendications 4 et 5, **caractérisé en ce que** le berceau (44) est mobile en translation suivant une direction généralement perpendiculaire à la direction de mise en pression de l'aube (18, 20, 22) contre le rotor (14) de l'étape (c) et essentiellement comprise dans un plan comprenant l'axe principal du rotor.

7. Procédé selon l'une des revendications 1 à 6, **caractérisé en ce que** l'étape (b) comprend la préhension de l'aube (18, 20, 22) par un dispositif de préhension (68) pourvu de moyens de fixation rapide (72) à un support (66) et préférentiellement de moyens de bridage d'une plateforme de l'aube.

8. Procédé selon l'unes des revendications 1 à 7, **caractérisé en ce que** le rotor (14) comprend des excroissances (38) avec des profils d'aube, formant des surfaces de réception des aubes.

9. Procédé selon l'unes des revendications 1 à 8, **caractérisé en ce que** l'aube (18, 20, 22) comprend une plateforme (23) du côté de sa partie destinée à être soudée au rotor (14), la plateforme présentant une excroissance (37) dont la section présente un profil d'aube et destinée à venir en contact avec la surface de réception (38) de l'aube (18, 20, 22).

10. Dispositif de soudage par friction d'aubes (18, 20, 22) à un rotor (14) de turbomachine axiale, comprenant :
un bâti (42) ;
un support de rotor (44) configuré pour maintenir le rotor (14) immobile durant l'opération de soudage par friction ; et
un support d'aube (62, 64, 66, 68) à mouvement de friction et à mouvement de forgeage vers le rotor (14) ;
**caractérisé en ce que** le support d'aube est apte à déplacer l'aube selon un mouvement orbital et **en ce que** le support de rotor comprend un berceau (44) monté pivotant par rapport à un axe essentiellement horizontal et perpendiculaire à la direction du mouvement de forgeage, le berceau (44) comprenant un noyau (52) apte à être fixé à un plateau diviseur (54) et apte à servir d'appui pour des supports (51) de la surface interne du rotor (14).

11. Dispositif selon la revendication 10, **caractérisé en ce que** le berceau comprend un plateau diviseur (54) apte à permettre un positionnement angulaire du rotor (14) selon son axe de rotation.

12. Dispositif selon l'une des revendication 10 et 11, **caractérisé en ce que** le berceau (44) comprend une surface de réception (56) du rotor (14) et un palier (48) à distance de la surface de réception (56), le palier étant apte à recevoir un axe (50) généralement perpendiculaire à la surface de réception (56).

13. Dispositif selon l'une des revendications 10 à 12, **caractérisé en ce que** le support d'aube (62, 64, 66, 68) comprend une pièce support (66) destinée à supporter un dispositif de préhension (68) de l'aube.

## Patentansprüche

1. Verfahren für das Reibschweißen von Laufradschaufeln (18, 20, 22) an einen Rotor (14) einer axialen Turbomaschine (2), welches die folgenden Schritte beinhaltet:
(a) Positionieren des Rotors (14) in der Weise, dass er eine Oberfläche (38) für die Aufnahme einer der Laufradschaufeln vorweist;
(b) Beginn des Reibens der Laufradschaufel (18, 20, 22) gegen die Oberfläche (38) für die Aufnahme der Laufradschaufeln (18, 20, 22), im Wesentlichen in einem mittleren Bereich der Kontaktfläche der Laufradschaufel mit der genannten Oberfläche, um eine Schweißtemperatur zu erreichen, wobei der Rotor (14) in der Ebene der Reibungsbewegung der Laufradschaufel (18, 20, 22) unbeweglich bleibt;
(c) Festsetzen der Laufradschaufel (18, 20, 22) und Schmieden der Laufradschaufel (18, 20, 22) an den Rotor (14);
**dadurch gekennzeichnet, dass**
die Bewegung der Laufradschaufel (18, 20, 22) in Schritt (b) vom orbitalen Typ ist und Schritt (a) die Einsetzung einer Stütze (51) im Inneren des Rotors (14) an der Innenseite beinhaltet, die der Oberfläche (38) für die Aufnahme der Laufradschaufel gegenüberliegt, um die genannte Aufnahmefläche gegenüber dem Druck beim Schmieden der Laufradschaufel (18, 20, 22) in Schritt (c) abzustützen.

2. Verfahren gemäß Patentanspruch 1, **dadurch gekennzeichnet, dass** der Rotor eine Kompressortrommel (14) ist, die vorzugsweise eine Hülle (16) beinhaltet, die im Allgemeinen rotationssymmetrisch um die Rotorachse angeordnet ist und einen hohlen Innenraum mit einem ersten Eingang am Vorderende der Trommel und einem zweiten Eingang am Hinterende der Trommel beschreibt.

3. Verfahren gemäß den Patentansprüchen 1 und 2, **dadurch gekennzeichnet, dass** das Einsetzen einer Stütze (51) im Inneren der Trommel (14) das Einsetzen eines Kerns (52) im Inneren der Trommel (14) beinhaltet, wobei der Kern (52) so konfiguriert ist, dass er als Unterlage für die Stütze (51) auf der gegenüberliegenden Innenseite der Trommel dient und sich der Kern vorzugsweise mindestens über die Hälfte der Länge der Trommel zwischen dem ersten Eingang und dem zweiten Eingang erstreckt.

4. Verfahren gemäß einem der Patentansprüche 1 bis 3, **dadurch gekennzeichnet, dass** Schritt (a) das Aufsetzen des Rotors (14) auf einem Wagen (44) anhand einer Teilscheibe (54) beinhaltet, um den Rotor (14) winklig entlang seiner Hauptachse im Verhältnis zum Wagen (44) positionieren zu können.

5. Verfahren gemäß Patentanspruch 4, **dadurch gekennzeichnet, dass** der Wagen (44) so konzipiert ist, dass er in der Lage ist, sich im Verhältnis zu einer, vorzugsweise rechtwinklig zur Hauptachse des Rotors (14) verlaufenden Querachse und zur Achse, in der die Laufradschaufel (18, 20, 22) in Schritt (c) gegen den Rotor gedrückt wird, zu drehen.

6. Verfahren gemäß einem der Patentansprüche 4 und 5, **dadurch gekennzeichnet, dass** der Wagen (44) in einer Richtung, die im Allgemeinen rechtwinklig zur Richtung verläuft, in der die Laufradschaufel (18, 20, 22) in Schritt (c) gegen den Rotor (14) gedrückt wird und im Wesentlichen in einer Ebene, die die Hauptachse des Rotors beinhaltet, beweglich ist.

7. Verfahren gemäß einem der Patentansprüche 1 bis 6, **dadurch gekennzeichnet, dass** Schritt (b) das Greifen der Laufradschaufel (18, 20, 22) anhand einer Greifvorrichtung (68) beinhaltet, die mit Schnellbefestigungen (72) für die Befestigung an einer Stütze (66) und vorzugsweise mit Mitteln für das Anflanschen einer Plattform der Laufradschaufel ausgerüstet ist.

8. Verfahren gemäß einem der Patentansprüche 1 bis 7, **dadurch gekennzeichnet, dass** der Rotor (14) Ausbuchtungen (38) mit Laufradschaufelprofilen beinhaltet, die Aufnahmeoberflächen für die Laufradschaufeln bilden.

9. Verfahren gemäß einem der Patentansprüche 1 bis 8, **dadurch gekennzeichnet, dass** die Laufradschaufel (18, 20, 22) eine Plattform (23) neben ihrem Teil besitzt, der für das Anschweißen an den Rotor (14) bestimmt ist, wobei die Plattform eine Ausbuchtung (37) aufweist, deren Querschnitt ein Laufradschaufelprofil aufweist und dafür bestimmt ist, um mit der Oberfläche (38) für die Aufnahme der Laufradschaufel (18, 20, 22) in Kontakt zu treten.

10. Vorrichtung für das Reibschweißen von Laufradschaufeln (18, 20, 22) an einen Rotor (14) einer axialen Turbomaschine, mit:
einem Rahmen (42);
einem Rotorträger (44), der so konfiguriert ist, dass er den Rotor (14) während des Reibschweißens unbeweglich hält; und
einer Laufradschaufelhalterung (62, 64, 66, 68) mit Reibungsbewegung und Anschweißbewegung an den Rotor (14);
**dadurch gekennzeichnet, dass** die Laufradschaufelhalterung in der Lage ist, die Laufradschaufel in einer orbitalen Bewegung zu versetzen und dadurch, dass der Rotorhalter einen Wagen (44) beinhaltet, der im Verhältnis zu einer im Wesentlichen horizontalen und rechtwinklig zur Schmiedebewegung verlaufenden Richtung drehbar montiert ist, wobei der Wagen (44) einen Kern (52) besitzt, der sich an einer Teilscheibe (54) befestigen lässt und in der Lage ist, als Auflagefläche für die Stützen (51) an der Innenseite des Rotors (14) zu dienen.

11. Vorrichtung gemäß Patentanspruch 10, **dadurch gekennzeichnet, dass** der Wagen eine Teilscheibe (54) aufweist, die in der Lage ist, eine winkelbezogene Positionierung des Rotors (14) entlang seiner Rotationsachse zu ermöglichen.

12. Vorrichtung gemäß einem der Patentansprüche 10 und 11, **dadurch gekennzeichnet, dass** der Wagen (44) eine Aufnahmefläche (56) für den Rotor (14) und ein Lager (48) in einigem Abstand von der Aufnahmefläche (56) beinhaltet, wobei das Lager in der Lage ist, eine Achse (50) aufzunehmen, die im Allgemeinen rechtwinklig zur Aufnahmefläche (56) verläuft).

13. Vorrichtung gemäß einem der Patentansprüche 10 bis 12, **dadurch gekennzeichnet, dass** die Laufradschaufelhalterung (62, 64, 66, 68) ein Halteteil (66) beinhaltet, das dazu bestimmt ist, um eine Greifvorrichtung (68) für die Laufradschaufel zu halten.

## Claims

1. Process for friction welding of blades (18, 20, 22) to a rotor (14) of an axial turbomachine (2), comprising the following steps:
(a) positioning the rotor (14) so as to offer a faying surface (38) for one of the blades;
(b) starting to move the blade (18, 20, 22) with a frictional motion against the faying surface (38) for the blade (18, 20, 22) mainly in a mean contact plane between the blade and the said surface so as to reach a welding temperature, the rotor (14) being held motionless in the plane of frictional movement of the blade (18, 20, 22); and
(c) immobilisation of the blade (18, 20, 22) and forging of the blade (18, 20, 22) against the rotor (14);
**Characterised in that** the movement of the blade (18, 20, 22) in step (b) is an orbital one, and step (a) comprises establishing a support (51) on the inside of the rotor (14) on an opposite inner to the faying surface (38) for the blade so as to support the said faying surface against the pressurising forging of the blade (18, 20, 22) of step (c).

2. Process in accordance with Claim 1, wherein the rotor is a compressor drum (14), preferably comprising a shell (16) generally circularly symmetrical about the axis of the rotor and defining a hollow interior volume with a first aperture at the front end of the drum and a second aperture at the rear end.

3. Process in accordance with Claims 1 and 2, wherein locating a support (51) within the drum (14) comprises inserting a core (52) inside the drum (14), the core (52) being the basis for the support (51) of the opposite internal surface of the drum, the core extending preferably over at least half the length of the drum between the first and second apertures.

4. Process in accordance with one of Claims 1 to 3, wherein stage (a) comprises locating the rotor (14) on a cradle (44) via an indexing table (54) so as to angularly position the rotor (14) about its main axis relative to the cradle (44).

5. Process in accordance with Claim 4, wherein the cradle (44) is designed to be capable of pivoting about a transverse axis, preferably perpendicular both to the main axis of the rotor (14) and to the direction of applying pressure to the blade (18, 20, 22) against the rotor during stage (c).

6. Process in accordance with one of Claims 4 and 5, wherein the cradle (44) is movable in translation along a direction generally perpendicular to the direction of applying pressure to the blade (18, 20, 22) against the rotor (14) during stage (c) and mainly within a plane containing the principal axis of the rotor.

7. Process in accordance with one of Claims 1 to 6, wherein step (b) comprises clamping the blade (18, 20, 22) by a clamping device (68) provided with a means of rapid fixing (72) to a mounting (66) and preferably a means of clamping a plate on the blade.

8. Process in accordance with one of Claims 1 to 7, wherein the rotor (14) comprises a series of protrusions (38) which have blade-shaped cross sections, forming faying surfaces for the blades.

9. Process in accordance with of Claims 1 to 8, wherein the blade (18, 20, 22) comprises a plate (23) on that part to be welded to the rotor (14), the plate having a protrusion (37) whose section has a blade profile and is intended to be in contact with the faying surface (38) for the blade (18, 20, 22).

10. Device for friction welding of blades (18, 20, 22) to a rotor (14) of an axial turbomachine (2), comprising:
a frame (42);
a rotor carrier (44) configured to hold the rotor (14) still during the friction welding operation;
and a blade support (62, 64, 66, 68) enabling a friction movement and a forging movement towards the rotor (14), wherein the said blade holder is designed to move the blade in an orbital motion;
characterised n that the rotor support comprises a cradle (44) mounted to pivot relative to a substantially horizontal axis and perpendicular to the direction of the forging movement, the cradle (44) comprising a support for the supports (51) on the inner surface of the rotor (14).

11. Device in accordance with Claim 10, wherein the cradle comprises an indexing table (54) designed to allow angular positioning of the rotor (14) on its axis of rotation.

12. Device in accordance with Claims 10 and 11, wherein the cradle (44) comprises a mounting bed (56) for the rotor (14) and a bearing (48) at a distance from the mounting bed (56), the bearing being able to support a shaft (50) generally perpendicular to the mounting bed (56).

13. Device in accordance with one of Claims 10 to 12, wherein the blade support (62, 64, 66, 68) comprises a mounting (66) for supporting a blade clamping device (68).
